(19) Europäisches Patentamt
European Patent Office
Office européen des brevets

(11) **EP 1 895 291 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(51) Int Cl.:
**G01N 22/00** *(2006.01)* **G01N 22/04** *(2006.01)*
**A24D 3/02** *(2006.01)*

(21) Anmeldenummer: **07007952.0**

(22) Anmeldetag: **19.04.2007**

(54) **Verfahren zur Messung der Masse eines Weichmachers und der Feuchtigkeit in einem Filterstab**

Method for measuring the mass of a plasticizer and humidity in a filter rod

Procédé de mesure de la masse d'un plastifiant et de l'humidité dans la tige d'un filtre

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.08.2006 DE 102006041191**
**25.01.2007 DE 202007001196 U**

(43) Veröffentlichungstag der Anmeldung:
**05.03.2008 Patentblatt 2008/10**

(73) Patentinhaber: **TEWS ELEKTRONIK Dipl.-Ing. Manfred Tews**
**22459 Hamburg (DE)**

(72) Erfinder:
• **Herrmann, Rainer**
**20253 Hamburg (DE)**
• **Schlemm, Udo, Dr.**
**20259 Hamburg (DE)**
• **Sexauer, Wolfgang**
**79100 Freiburg (DE)**

(74) Vertreter: **Hauck Patentanwaltspartnerschaft mbB**
**Postfach 11 31 53**
**20431 Hamburg (DE)**

(56) Entgegenhaltungen:
EP-A- 0 642 746      EP-A- 0 889 321
EP-A- 1 197 746      WO-A-2004/065948
DE-A1-102004 010 618      US-A- 5 214 969

• SEXAUER W., HERRMANN R., SCHLEMM U., CAMM B.: "Rapid determination of plasticiser content in filter rods at the making machine" ABSTRACTS OF PRESENTATIONS MADE AT THE 2003 CORESTA JOINT MEETING OF THE SMOKE SCIENCE AND PRODUCT TECHNOLOGY STUDY GROUPS, ABSTR. ST 31, [Online] 2003, XP002465510 Freiburg, Deutschland Gefunden im Internet: URL:http://www.coresta.org/Past_Abstracts/ Freiburg2003-SmokeTech.pdf> [gefunden am 2008-01-21]
• BORGWALDT-KC: "Drop Through Station DT"[Online] 22. Januar 2008 (2008-01-22), XP002465511 Gefunden im Internet: URL:http://www.borgwaldt.de/cms/front_cont ent.php?idart=108&idcat=97&lang=2> [gefunden am 2008-01-21]
• D L MASSART ET AL: "10.7 Multicomponent analysis by multiple linear regression" In: "Handbook of Chemometrics and Qualimetrics Part A", 1 January 2003 (2003-01-01), ELSEVIER SCIENCE B. V., AMSTERDAM, THE NETHERLANDS, XP055083215, ISBN: 978-0-44-489724-4 pages 292-294,
• MATTHIAS OTTO: "6.2.3 Applications in multicomponent analysis" In: "Chemometrics", 1 January 1999 (1999-01-01), WILEY-VCH, WEINHEIM, GERMANY, XP055083239, ISBN: 978-3-52-729628-6 pages 200-207,
• R W DWYER: "Predicting the Pressure Drops across Cellulose Acetate Filters", BEITRAGE ZUR TABAKFORSCHUNG INTERNATIONAL, vol. 13, no. 4, 1 August 1986 (1986-08-01) , pages 157-168, XP055083231,

- **EBBE NYFORS AND PERTTI VAINIKAINEN: "INDUSTRIAL MICROWAVE SENSORS", INDUSTRIAL MICROWAVE SENSORS, XX, XX, 1 January 1989 (1989-01-01), XP002334964,**

- **PAUL RUSLEMEYER: "5.2 CA filter tow for cigarette filters", MACROMOLECULAR SYMPOSIA, WILEY VCH VERLAG, WEINHEIM, DE, vol. 2008, 1 January 2004 (2004-01-01), pages 267-291, XP009114386, ISSN: 1022-1360**

**Beschreibung**

Die vorliegende Erfindung betrifft ein Verfahren zur Messung der Masse eines Weichmachers und der Feuchtigkeit in einem Filterstab, wie er als Zigarettenfilter eingesetzt wird.

Bei der Herstellung von Zigarettenfiltern wird in einer Filterstabmaschine aus einem Cellulose-Acetat Filtertow ein Strang geformt. Der Strang wird mit einem Weichmacher besprüht, der Fasern des Filtermaterials miteinander verschweißt und so eine Formstabilität für den Filterstab erzeugt. Der Weichmacher, in der Regel wird Triacetin verwendet, sorgt durch die Vernetzung der Fasern für die gewünschte Filterwirkung und stellt sicher, daß auch bei einem späteren Rauchvorgang der Filter in Form bleibt. Dies ist insbesondere wichtig, da beim Rauchvorgang auch eine nicht unerhebliche Menge an Wasserdampf durch den Filter strömt.

Die Filterwirkung eines Cellulose-Acetat Filters hängt von der Art des eingesetzten Filtertow-Fasermaterials ab. Das Filtertow-Fasermaterial wird durch Angabe seines Titers gekennzeichnet.

Neben der Abhängigkeit vom Material hängt die Filterwirkung auch von der Gesamtdichte des verwendeten Filtertows und der Art der Vernetzung der Fasern ab. Die Vernetzung der Fasern wird ganz wesentlich von der eingesetzten Menge an Triacetin bestimmt. Bei der Herstellung von Zigarettenfiltern wird allgemein angestrebt, eine möglichst große Filterwirkung für das Tabak-Rauch-Kondensat bei möglichst kleinem Zugwiderstand zu erreichen. Der Zugwiderstand ist der Druckabfall über einen Filter bei konstantem Luftfluß.

Aus EP 1 197 746 A1 ist ein Verfahren und eine Vorrichtung zur Messung des Triacetingehalts in Filtersträngen bei ihrer Produktion bekannt. Bei dem Verfahren wird ein Mikrowellenmeßgerät eingesetzt, das vor und nach der Zugabe von Triacetin zwei die Masse und die Feuchtigkeit bestimmende Meßgrößen ermittelt. Aus den gewonnenen Meßgrößen kann die Masse des zugesetzten Triacetins bestimmt werden. Das Verfahren wird in der Linie des Herstellungsprozesses vor und nach dem Zusatz von Triacetin eingesetzt.

Auch die gleichzeitige Acetat- und Triacetin-Messung gemäß WO 03/070030 A1 erfolgt in einer Maschine zur Herstellung von Zigarettenfilter. Es erfolgt eine Messung des Massenstroms an Filtertow-Material durch die Maschine und eine Messung der verwendeten Weichmachermasse. Eingesetzt wird hierbei ein Mikrowellenmeßgerät. Auch bei diesem Ansatz erfolgt eine Messung während des Herstellungsprozesses, wodurch es notwendig ist, zwei Sensoren, einmal vor der Zugabe des Weichmachers und einmal nach Zugabe des Weichmachers in die Maschine einzubauen.

Diese Online-Verfahren sind allerdings nur dort einsetzbar, wo am Filterstrang in der Filterstabmaschine auch der nötige Platz zur Installation eines Mikrowellensensors vorhanden ist. Darüber hinaus besteht bei der Ein-Sensor-Strang-Methode auch hier das Problem der periodischen Ausschuß-Produktion durch die periodische Triacetinabschaltung, zur Bestimmung der Masse des Filterstabs ohne Triacetin.

Aus Sexauer W., et al. "Rapid Determination of Plasticiser Content in Filter Rods at the Making Machine" ist ein Verfahren zur schnellen Bestimmung des Weichmachergehalts in Filterstäben an Filterstabmaschinen bekannt, bei dem zwei Messgrößen eines Mikrowellensystems und das gemessene Gewicht ausgewertet werden. Aus den zur Akte gereichten Vortragsunterlagen ist es bekannt, Triacetin nach der Linearkombination der Quotienten A/m und B/m zu bestimmen.

Aus R. Herrmann und J. Sikora "Mikrowellen-Feuchtemessung mit Resonatoren und ihre Anwendung" ist bekannt geworden, bei einem flüssigen, ternären Gemisch von zwei polaren Stoffen (z. B. Wasser und Azeton) und einer dritten unpolaren Komponente (z. B. Zellulose-Acetat), die Konzentration des einzelnen Komponenten voneinander getrennt zu erfassen.

Der Erfindung liegt die Aufgabe zugrunde, mit einfachen Mitteln die Masse eines Weichmachers und der Feuchtigkeit in einem Filterstab genau zu messen.

Erfindungsgemäß wird die Aufgabe durch ein Meßverfahren gemäß Anspruch 1 gelöst.

Filterstabmeßstationen zur Durchführung der Erfindung sind von den Herstellungsmaschinen für Zigarettenfilter gesondert ausgebildete Meßstationen. Der Meßstationen werden stichprobenartig Filterstäbe zugeführt und ihre physikalischen Eigenschaften gemessen. Die Filterstabmeßstation mißt mindestens die Masse des Filterstabs und dessen Zugwiderstand. Die Filterstäbe werden der Filterstabmeßstation zugeführt, nachdem der Weichmacher auf das Filtermaterial aufgebracht wurde. Bei der Messung der Masse wird die Gesamtmasse des Filterstabs gemessen, das ist die Masse eines trockenen Filterstabs zuzüglich der Masse des aufgebrachten Weichmachers und der in dem Material enthaltenen Feuchtigkeit. Im folgenden wird unter trockenem Filtermaterial stets die Masse des Filterstabs ohne die Weichmachermasse und die Masse der Feuchtigkeit verstanden. Der Zugwiderstand wird gemessen als der Druckabfall, der bei einer konstanten Luftströmung durch den Filter auftritt.

Zusätzlich zu diesen beiden Meßgrößen wird ein Mikrowellenmeßgerät eingesetzt, das mindestens zwei weitere Meßgrößen zu dem Filterstab ermittelt.

Der Erfindung liegt die Erkenntnis zugrunde, daß für eine einfache und genaue Messung des Weichmachergehalts in dem Filterstab der Zugwiderstand in Kombination mit den anderen Größen entscheidend ist.

Die Filterstabmeßstation ist mit einer Steuerung versehen, an der mindestens die Meßwerte zur Masse, dem Zugwiderstand und zwei Meßwerte des Mikrowellenmeßgeräts anliegen. Die Filterstabmeßstation ist als separates Gerät ausgebildet, das mit einer Öffnung versehen ist, über die ein oder mehrere zu messende Filterstäbe zur Messung eingebracht werden können. Die Filterstäbe können dabei maschinell oder manuell dem Strom der Filterstäbe in der Filterstabmaschine entnommen werden. Das Mikrowellenmeßgerät besitzt einen Mikrowellenresonator und Meßmittel, um Änderungen der Resonanzkurve zu erfassen. Die Meßmittel erfassen bevorzugt zwei Kenngrößen der Resonanz: Eine Resonanzfrequenzverschiebung (A) und eine Verbreiterung der Resonanzkurve (B). Der letztere Wert wird auch gelegentlich als Linienverbreiterung (B) bezeichnet. Beide Meßgrößen ergeben, wenn sie gemeinsam mit der Masse und dem Zugwiderstand ausgewertet werden, einen sehr zuverlässigen Wert für die zugesetzte Masse an Weichmacher.

Die Filterstabmeßstation ist mit einem Mikrowellenmeßgerät ausgestattet, das in einem Abschnitt des Filterstabs mißt. Bezogen auf die Längsrichtung des Filterstabs erfolgt eine Messung für eine deutlich geringere Länge des Filterstabs als der gesamte zu messende Filterstab besitzt. Derartige Meßgeräte sind aus EP 0 889 321 A1 bekannt, um ein Dichte- und/oder Feuchteprofil in Längsrichtung einer Probe zu gewinnen. Der zu messende Filterstab wird dabei durch eine Durchgangsbohrung transportiert, die sich durch einen im wesentlichen flach erstreckenden Resonator erstreckt. Der Resonator ist dabei mit einem Dielektrikum gefüllt, um die Meßgenauigkeit zu verbessern. Auch Mikrowellenresonatoren mit anderer Geometrie können mit einem Dielektrikum gefüllt sein.

Es sind Transportmittel vorgesehen, die den Filterstab in seiner Längsrichtung durch das Mikrowellenmeßgerät transportieren. Während des Transports des Filterstabs erfolgen mehrere Meßvorgänge, so daß die Meßwerte von einer Auswerteeinheit der Filterstabmeßstation jeweils abschnittsweise für einen Filterstab ausgewertet werden können. Die Auswerteeinheit bestimmt aus den abschnittsweise gewonnenen Meßwerten eine lokale Konzentration an Weichmachern in dem Filterstab. Auf diese Weise kann ein Konzentrationsprofil in einem Filterstab bestimmt werden. Zur Auswertung einer Gesamtkonzentration in dem Filterstab werden die lokalen Konzentrationswerte gemittelt. Hierbei können unterschiedliche Mittlungsverfahren eingesetzt werden.

Die erfindungsgemäße Aufgabe wird durch ein Verfahren zur Messung der Masse eines Weichmachers und der Feuchtigkeit in einem Filterstab gelöst.

Das Verfahren gemäß Anspruch 1 weist die Verfahrensschritte auf, die Masse und den Zugwiderstand des zu messenden Filterstabs zu erfassen und mit einem Mikrowellensensor mindestens zwei Meßwerte des Filterstabs zu erfassen.

Das erfindungsgemäße Verfahren läuft nicht in der Maschine zur Herstellung des Filters (Filter-Maker) ab, sondern in einer separaten Filterstabmeßstation. Das Mikrowellenmeßgerät mißt eine Verstimmung der Resonanzfrequenz in Form deren Verschiebung sowie eine Verbreiterung der Resonanzkurve für eine in einem Resonator erzeugte Resonanz. Bei dem erfindungsgemäßen Verfahren wird der Feuchtegehalt in dem Filterstab aus den Meßgrößen des Mikrowellensensors und der gemessenen Masse (M) bestimmt.

Die Bestimmung der Masse des Weichmachers erfolgt aus zwei Meßwerten des Mikrowellenmeßgeräts, dem Meßwert zur Masse (M) und dem Zugwiderstand (PD).

Bei dem erfindungsgemäßen Verfahren kann auch die Trockenmasse des Filterstabs aus der gemessenen Masse des Filterstabs, der Masse des Weichmachers und der Masse des Wassers durch Differenzbildung bestimmt werden.

In einer bevorzugten Ausgestaltung des erfindungsgemäßen Verfahrens wird der zu messende Filterstab über eine Entnahmeeinrichtung seinem Herstellungsprozeß entnommen. Nachfolgend erfolgt als erste Messung bevorzugt eine Massebestimmung, beispielsweise als eine Gewichtsbestimmung durch Wiegen. Bei der Massebestimmung wird naturgemäß die gesamte Masse bestimmt, also die Masse aufgrund des Filtertow, der darin enthaltenen Feuchtigkeit und dem eingesetzten Weichmacher.

Nach der Massebestimmung wird der zu vermessende Filterstab dem Mikrowellensensor zugeführt, der an diesem mindestens zwei Größen mißt.

In einem nachfolgenden Schritt wird an dem Filterstab der Zugwiderstand gemessen, der sich bei konstantem Luftstrom durch den Filterstab einstellt. Der Zugwiderstand wird hierbei gemessen als der Druckabfall bei konstantem Luftfluß durch den Filterstab.

In einem nachfolgenden Schritt kann bevorzugt auch noch der Durchmesser (D) des Filterstabs gemessen werden.

Das erfindungsgemäße Verfahren wird nachfolgend anhand eines Ausführungsbeispiels sowie anhand von zwei Kurven näher erläutert. Es zeigt:

Fig. 1    ein Blockdiagramm zu dem erfindungsgemäßen Verfahren,

Fig. 2    den Vergleich von gemessenen Feuchtwerten mit vorgegebenen Referenzwerten,

Fig. 3    eine Messung des Triacetin-Werts in mg im Vergleich zu Referenzwerten, und

Fig. 4    eine schematische Ansicht eines Mikrowellenmeßgeräts zur Bestimmung einer lokalen Weichmacherkonzentration.

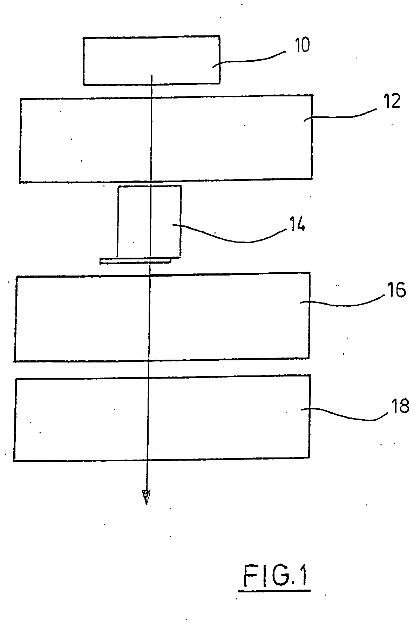

Das erfindungsgemäße Verfahren wird nachfolgend mit Bezug auf Fig. 1 näher erläutert. In einem ersten Schritt 10 werden manuell oder durch einen Filterstab-Hopper automatisch Filterstäbe dem Produktionsprozeß entnommen. Der Filterstab-Hopper führt die entnommenen Filterstäbe zur Messung einer Filterstabmeßstation zu. In der Filterstabmeßstation wird in einem Verfahrensschritt 12 die Masse M des Filterstabs geliefert. In einem nachfolgenden Schritt 14 wird der Filterstab einem Mikrowellensensor zugeführt. Das Mikrowellenmeßgerät besitzt einen Mikrowellenresonator, in den der zu messende Filterstab eingebracht wird. Im Mikrowellenresonator bildet sich bei der Resonanzfrequenz eine stehende Welle, mit der ein zu messender Filterstab wechselwirkt. Der Filterstab mit seiner räumlichen Ausdehnung und seinen elektrischen Eigenschaften verändert den Resonator, so daß die in dem Resonator auftretende Resonanzkurve sich verändert. Für die Messungen sind zwei Änderungen in der Resonanzkurve ausschlaggebend. Einerseits tritt eine Verschiebung der Resonanzfrequenz auf. Diese Größe wird mit A bezeichnet. Die zweite charakteristische Größe ist die Verbreiterung B der Resonanzkurve. Die Veränderung A ist zurückzuführen vor allem auf den Realteil der Dielektrizitätskonstante des eingebrachten Filterstabs, während die Veränderung B vor allem auf dem Imaginärteil der Dielektrizitätskonstante beruht. Im allgemeinen wird der Parameter A zur Bestimmung der Masse des Produktes verwendet. Der Quotient der Größen B/A ist unabhängig von der Masse und gibt einen Hinweis auf den Feuchtigkeitsgehalt.

In Schritt 14 ermittelt der Mikrowellensensor in an sich bekannter Weise die Meßgrößen A und B. In einem nachfolgenden Schritt 16 erfolgt die Messung des Zugwiderstands (PD), der auch als "pressure drop" bezeichnet wird. Der Zugwiderstand gibt den Druckabfall durch den Filterstab an, der sich bei definiertem Luftstrom einstellt. Wichtig hierbei ist, daß mit stationärem Luftstrom gemessen wird und nicht transiente Effekte, wie sie sich beim Auf- oder Abbau des Luftstroms ergeben, berücksichtigt werden.

In einem abschließenden Verfahrensschritt 18 wird der Durchmesser des Filterstabs gemessen.

Die in der Filterstabmeßstation gewonnenen Daten werden in einer Auswerteeinheit in der Meßstation verarbeitet. Als besonders vorteilhaft hat sich zur Messung der Triacetinmasse folgender Gleichungsansatz herausgestellt:

$$M_{triacetin} = a_0 + a_1 \cdot A + a_2 \cdot B + a_3 \cdot M + a_4 \cdot PD.$$

Wichtig an diesem Ansatz ist, daß die Größe PD zur Bestimmung der TriacetinMasse in die Gleichung eingeht.

Der Feuchtegehalt wird bestimmt als:

$$M_{feuchte} = b_0 + b_1 \cdot A + b_2 \cdot B + b_3 \cdot M/A,$$

wobei auch ein Term $b_4 \cdot M/B$ zusätzlich oder statt des $b_3$-Terms berücksichtigt werden kann.

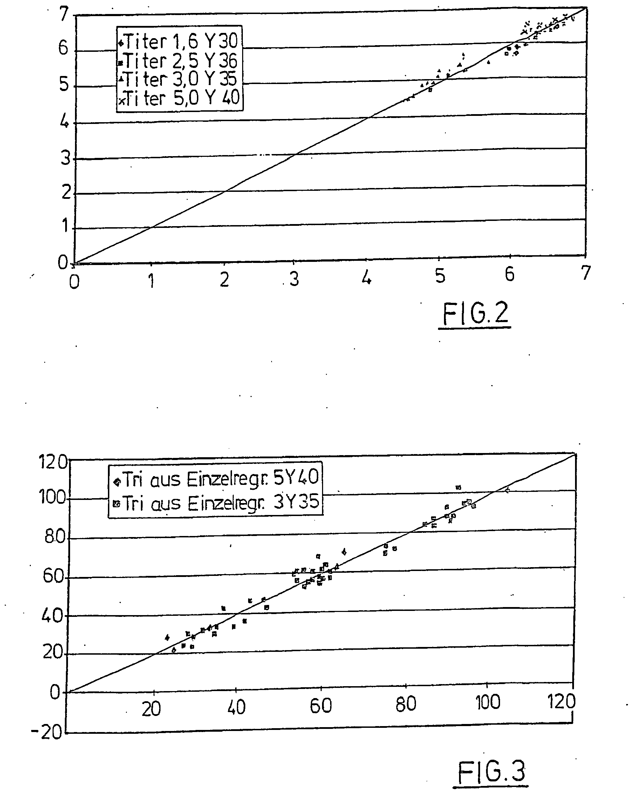

Figur 2 zeigt für verschiedene Titer (1.6 Y30, 2.5 Y36, 3.0 Y35 und 5.0 Y40) den Vergleich zwischen gemessenen Feuchte-Werten auf der Ordinate zu vorgegebenen Referenzwerten auf der Abszisse. Deutlich sichtbar ist, daß eine zuverlässige Erfassung der Feuchtigkeit mit dem erfindungsgemäßen Verfahren erfolgt. Auffällig an der Bestimmung der Feuchte in dem Filterstab ist, daß diese Titer-unabhängig erfolgen kann. Mit anderen Worten, es existiert ein Satz von Parametern ($b_0$, $b_1$, $b_2$, $b_3$), der unabhängig von dem Titer des Materials den Feuchtegehalt beschreibt.

In Fig. 3 dargestellt, ist die Messung des Triacetingehalts. Hierbei sind wieder auf der Ordinate die Meßwerte aufgetragen, während auf der Abszisse vorbestimmte Referenzwerte aufgetragen sind. Auch hier liegt mit dem obigen Ansatz zur Bestimmung der Triacetinmasse in dem Filterstab eine zuverlässige Messung vor. Im Gegensatz zur Feuchtigkeitsbestimmung ist bei der Triacetinbestimmung der Koeffizientensatz ($a_0$, $a_1$, $a_2$, $a_3$, $a_4$) nicht unabhängig vom Titer des Materials. Dies bedeutet, daß zur Auswertung der Meßdaten zusätzlich der Titer des Materials bekannt sein muß, um den richtigen Satz an Parametern zu wählen.

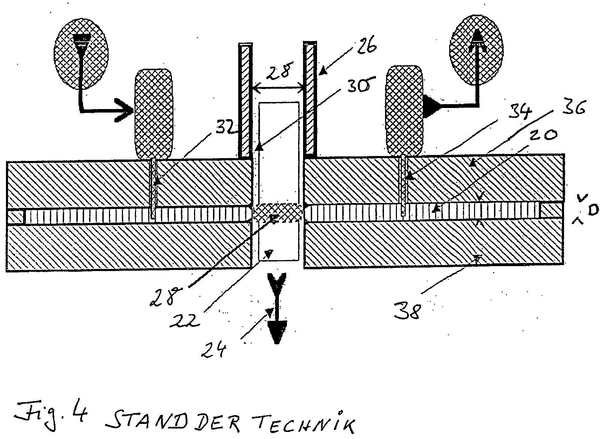

Fig. 4 zeigt ein Mikrowellenmeßgerät, das zur Messung eines Triacetinprofils in einem Filterstab geeignet ist. Das Mikrowellenmeßgerät entspricht in seinem Aufbau im wesentlichen dem aus EP 0 889 321 A1 bekannten Mikrowellenmeßgerät. Das Mikrowellenmeßgerät gemäß Fig. 4 besitzt einen Resonatorhohlraum 20, durch den ein Filterstab 22 in Richtung 24 transportiert wird. Der Filterstab 22 wird über ein Führungsrohr 26 dem Resonatorhohlraum zugeführt. Aufgrund der gewählten Geometrie für den Resonatorhohlraum werden die charakteristischen Größen A und B in einem Bereich 28 gemessen. Das Führungsrohr 26 besitzt einen Durchmesser 28, der geringfügig größer als der Durchmesser des Filterstabs 22 ist. Im Bereich 30 ist das Führungsrohr 26 an den Resonatorkörper angesetzt. Über eine Mikrowellensendeantenne 32 werden die Mikrowellen in den Resonatorhohlraum 20 eingespeist, wo sie über eine Mikrowellenempfängerantenne 34 gemessen bzw. wieder ausgekoppelt werden.

Der Resonatorhohlraum wird von einem Oberteil 36 und einem Unterteil 38 begrenzt. Die Geometrie ist hierbei so gewählt, daß die Höhe D deutlich kleiner ist als die Erstreckung des Resonatorhohlraums in seiner Ausdehnung quer zur Transportrichtung 24. Die gemessenen Werte A und B geben Auskunft über die Triacetinkonzentration in dem Abschnitt 28 und ermöglichen so durch einen Transport des Filterstabs 22 hindurch mehrere Abschnitte an einem Filterstab zu messen. Jeder einzelne Abschnitt kann nach dem oben beschriebenen Verfahren ausgewertet werden.

Die Versuche haben gezeigt, daß bei der Vermessung auch die seit der Produktion des Filterstabs verstrichene Zeit entscheidend mit eingeht. Es hat sich gezeigt, daß innerhalb der ersten zehn Minuten mit einem Koeffizientensatz gearbeitet werden kann, der zeitunabhängig ist. Ist die Zeitdauer von 10 Minuten seit dem Aufbringen des Triacetins überschritten und hat somit eine Aushärtung eingesetzt, so hat sich herausgestellt, daß die Koeffizientensätze zur Bestimmung der Triacetinmasse sich ändern. Eine Bestimmung der Triacetinmasse ist jedoch auch mit dem veränderten Koeffizentensatz möglich.

In einer besonders bevorzugten Ausgestaltung werden die erfaßten Meßdaten von einer Steuereinheit verarbeitet und mit vorgegebenen Referenzwerten verglichen. Zeigt der Vergleich, daß der tatsächlich vorhandene Triacetinwert oder der Trockenwert des verarbeitenden Materials zu stark vom entsprechenden Referenzwert abweicht, so kann ein Warnsignal ausgelöst werden. Die Genauigkeit der Messungen hat auch gezeigt, daß die gemessenen Werte grundsätzlich zur Regelung sowohl des Massenstroms als auch des Triacetinstroms in dem Prozeß zur Herstellung des Filterstabs geeignet sind.

## Patentansprüche

1.  Verfahren zur Messung der Masse eines Weichmachers und des Feuchtegehalts in einem Filterstab, das folgende Schritte aufweist:

    • Die Gesamtmasse (M) und der Zugwiderstand (PD) des Filterstabs werden erfaßt und
    • ein Mikrowellenmeßgerät misst eine Resonanzfrequenzverschiebung (A) und eine Verbreiterung der Resonanzkurve (B) einer in einem Mikrowellenresonator in Gegenwart des zu messenden Filterstabs erzeugten Resonanz, wobei der Feuchtegehalt in dem Filterstab aus den Meßwerten des Mikrowellenmeßgeräts (A, B) und der gemessenen Gesamtmasse (M) bestimmt und die Masse ($M_{triacetin}$) an Weichmacher in dem Filterstab aus den Meßwerten (A, B) des Mikrowellenmeßgeräts und den Werten der Gesamtmasse (M) und des Zugwiderstands (PD) bestimmt wird,
    • wobei die Bestimmung der Masse an Weichmacher in dem Filterstab ($M_{triacetin}$) durch:

$$M_{triacetin} = a_0 + a_1\ A + a_2\ B + a_3\ M + a_4\ PD,$$

    mit einem vom Titer des Materials abhängigen Koeffizientensatz ($a_0$, $a_1$, $a_2$, $a_3$, $a_4$) erfolgt und der Koeffizientensatz zur Bestimmung der Masse an Weichmacher sich mit einer Zeitdauer nach dem Aufbringen des Triacetins verändert, jedoch innerhalb der ersten zehn Minuten zeitunabhängig ist.

2.  Verfahren nach Anspruch 1, **dadurch gekennzeichnet, daß** der zu messende Filterstab über eine Entnahmeeinrichtung der Maschine zur Herstellung des Filterstabs entnommen wird.

3.  Verfahren nach Anspruch 1, **dadurch gekennzeichnet, daß** der Durchmesser des Filterstabs gemessen wird.

## Claims

1.  Method for measuring the mass of a plasticizer and the moisture content in a filter rod comprising the following steps:

    • The total mass (M) and the draw resistance (PD) of the filter rod are measured, and
    • a microwave measuring instrument measures a resonance frequency shift (A) and a widening of the resonance curve (B) of a resonance generated in a microwave resonator in the presence of the filter rod to be measured, wherein the moisture content in the filter rod is determined from the measured values of the microwave measuring instrument (A, B) and the measured total mass (M), and the mass ($M_{triacetin}$) of plasticiser in the filter rod is determined from the measured values (A, B) of the microwave gauge and the values of the total mass (M) and the draw resistance (PD),
    • - wherein the calculation of the mass of plasticizer in the filter rod ($M_{triacetin}$) is carried out by:

$$M_{triacetin} = a_0 + a_1\ A + a_2\ B + a_3\ M + a_4\ PD,$$

with a coefficient set (a0, a1, a2, a3, a4) dependent on the titer of the material, and the coefficient set for determining the mass of plasticizer changes within a period of time after the application of the triacetine, but is time-independent within the first ten minutes.

**2.** Method according to claim 1, **characterized in that** the filter rod to be measured is removed from the machine for producing the filter rod via a removal device.

**3.** A method according to claim 1, **characterised in that** the diameter of the filter rod is measured.

**Revendications**

**1.** Procédé destiné à mesurer la masse d'un assouplissant et le taux d'humidité dans une tige de filtre, présentant les étapes suivantes :

- détection de la masse totale (M) et de la résistance à la traction (PD) de la tige de filtre, et
- mesure, par un dispositif de mesure de microondes, d'un décalage de fréquence de résonnance (A) et d'un élargissement de la courbe de résonnance (B) d'une résonnance produite dans un résonateur à microondes en présence de la tige de filtre à mesurer, où le taux d'humidité dans la tige de filtre est déterminé à partir des valeurs de mesure du dispositif de mesure de microondes (A, B) et de la masse totale (M) mesurée, et la masse ($M_{triacetin}$) d'assouplissant dans la tige de filtre est déterminée à partir des valeurs de mesure (A, B) du dispositif de mesure de microondes et des valeurs de la masse totale (M) et de la résistance à la traction (PD),
- dans lequel la détermination de la masse d'assouplissant dans la tige de filtre ($M_{triacetin}$) est obtenue par :

$$(M_{triacetin}) = a_0 + a_1\ A + a_2\ B + a_3\ M + a_4\ PD,$$

avec un ensemble de coefficients ($a_0$, $a_1$, $a_2$, $a_3$, $a_4$) dépendant du titre du matériau, où l'ensemble de coefficients destiné à déterminer la masse d'assouplissant varie avec une durée après application de la triacétine, mais n'est pas dépendant du temps pendant les premières dix minutes.

**2.** Procédé selon la revendication 1, **caractérisé en ce que** la tige de filtre à mesurer est retirée par un dispositif de retrait de la machine pour la fabrication de la tige de filtre.

**3.** Procédé selon la revendication 1, **caractérisé en ce que** le diamètre de la tige de filtre est mesuré.

FIG.1

Titer 1,6 Y30
Titer 2,5 Y36
Titer 3,0 Y35
Titer 5,0 Y40

FIG.2

Tri aus Einzelregr. 5Y40
Tri aus Einzelregr. 3Y35

FIG.3

Fig. 4 STAND DER TECHNIK

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1197746 A1
- WO 03070030 A1

- EP 0889321 A1

**In der Beschreibung aufgeführte Nicht-Patentliteratur**

- **SEXAUER W. et al.** *Rapid Determination of Plasticiser Content in Filter Rods at the Making Machine*

- **R. HERRMANN ; J. SIKORA.** *Mikrowellen-Feuchtemessung mit Resonatoren und ihre Anwendung*